# EUROPEAN PATENT APPLICATION

(11) **EP 4 166 233 A1**
(43) Date of publication of application: **19.04.2023**
(21) Application number: 22200959.9
(22) Date of filing: 11.10.2022
(51) Int. Cl.: B01L 7/00, G01N 21/03, B01L 3/00

(54) **HAND-HELD LAMP DETECTOR AND SYSTEM**

(30) Priority: 12.10.2021 CN 202122453852 U
(71) Applicant: Holosensor Medical Technology Ltd., Kunshan Jiangsu 215300 (CN)
(72) Inventor: YAN, Jing, Kunshan, 215300 (CN); ZHAI, Feng, Kunshan, 125300 (CN); SHI, Haiyang, Kunshan, 215300 (CN); LU, Zixing, Kunshan, 215300 (CN); WANG, Jaibin, Kunshan, 215300 (CN)
(74) Representative: Bryers LLP

(57) **Abstract**

The present invention discloses a hand-held LAMP detector and a hand-held LAMP detection system. The hand-held LAMP detector comprises: a housing with an inner cavity and a chip port for inserting a microfluidic chip; a chip seat arranged in the inner cavity and having an accommodating space for accommodating the microfluidic chip; a heating assembly for isothermally heating the microfluidic chip, and arranged in the inner cavity; an optical detection device movably arranged in the inner cavity, the optical detection device having a plurality of detection positions which respectively corresponds to a plurality of reaction chambers of the microfluidic chip; a driving mechanism to drive the optical detection device to move, the driving mechanism being arranged in the inner cavity.

## Description

### Technical Field

The present invention belongs to the field of LAMP detection technique, and relates to a hand-held LAMP detector and system.

### Background

LAMP (Loop-mediated isothermal amplification) technology is widely used in the field of biological diagnosis due to its mild reaction conditions (low reaction temperature), short reaction time and other advantages, such as nucleic acid amplification detection to diagnose the presence of pathogens in samples. LAMP technology is a process that provides conditions for *in vitro* amplification of nucleic acid fragments, enables them to be exponentially amplified, adds fluorescent dyes or fluorescent markers in the process of nucleic acid amplification, uses optical devices to detect the intensity of fluorescent signals, and obtains nucleic acid amplification results through the analysis of fluorescent signals. In nucleic acid amplification reaction, the reaction system needs to be heated. The current LAMP detector can integrate nucleic acid amplification and detection. When the detection chip (usually a microfluidic chip) is put into the LAMP detector, it can heat, light, and detect the reaction chamber (usually an amplification reaction chamber) of the detection chip. One of the goals of the LAMP detector designers is to make the LAMP detector small and portable.

### Summary

The present invention provides a hand-held LAMP detector and a hand-held LAMP detection system.

A first aspect of the present invention provides a hand-held LAMP detector, comprises:
a housing with an inner cavity and a chip port for inserting a microfluidic chip;
a chip seat arranged in the inner cavity, the chip seat having an accommodating space for accommodating the microfluidic chip, and the accommodating space being opposite to the chip port;
a heating assembly for isothermally heating the microfluidic chip, the heating assembly being arranged in the inner cavity;
an optical detection device movably arranged in the inner cavity along the left-right direction, the optical
detection device having a plurality of detection positions which respectively corresponds to a plurality of reaction chambers of the microfluidic chip; and
a driving mechanism for driving the optical detection device to move along the left-right direction, the driving mechanism being arranged in the inner cavity.

In an embodiment, the hand-held LAMP detector further comprises a power supply, for supplying power for the heating assembly, the optical detection device, and the driving mechanism. Optionally, the power supply comprises a battery which is arranged in the inner cavity; further, the battery is a rechargeable battery. Optionally, the power supply comprises a power cord; further, the power cord is used to connect the mains supply.

In an embodiment, the chip port is arranged on a front side wall of the housing, the chip seat is located in a front portion of the inner cavity, the power supply is located at a rear side of the inner cavity, the heating assembly is arranged on the chip seat, at least part of the optical detection device is located above the chip seat, and the driving mechanism is arranged between the chip seat and the power supply.

In an embodiment, the chip seat comprises a fixed portion and a support portion located at the rear side of the fixed portion, the accommodating space comprises a slot arranged on the fixed portion for the microfluidic chip to pass through, the slot penetrates through the fixed portion in a front-rear direction, the support portion has a support surface for facing a rear portion of the microfluidic chip, and the heating assembly is arranged on the support surface. More preferably, the support surfaces face upwards; and/or, the slot is directly opposite to the chip port.

In an embodiment, the heating assembly comprises a heat conducting plate, a heating film, a thermal insulation pad, a temperature sensor and a fuse wire, the thermal insulation pad is arranged on the chip seat, the heating film is arranged on the thermal insulation pad, the heat conducting plate is arranged on the heating film, and the temperature sensor and the fuse wire are arranged in the thermal insulation pad.

In an embodiment, the driving mechanism comprises a guide rail extending in the left-right direction arranged on an inner wall of the housing, a mounting block movably arranged on the guide rail in the left-right direction, and a motor for driving the mounting block to move in the left-right direction, the motor is arranged on the inner wall of the housing, and the optical detection device is arranged on the mounting block.

In an embodiment, the battery is a rechargeable battery, and the rear side of the housing is provided with a power interface electrically connected with the power supply.

In an embodiment, the hand-held LAMP detector further comprises a printer and a controller, the printer is arranged on an upper side wall of the housing and above the power supply, and the controller is electrically connected with the optical detection device and the printer, respectively.

In an embodiment, the hand-held LAMP detector further comprises a touch screen and a controller, the touch screen is arranged on an upper side wall of the housing and above the power supply, and the controller is electrically connected with the heating assembly, the optical detection device, the driving mechanism, and the touch screen, respectively.

More preferably, the touch screen has a plurality of display states, in a first display state, the touch screen has an instruction input area for user to input instruction.

In an embodiment, a lower portion of the housing is provided with a recess portion for easy finger holding.

A second aspect of the present invention provides a hand-held LAMP detection system comprises a hand-held LAMP detector and a microfluidic chip, the hand-held LAMP detector is a hand-held LAMP detector as mentioned above.

In an embodiment, the microfluidic chip comprises a chip body, the chip body is provided with a sample port, a plurality of reaction chambers and a plurality of exhaust ports, each reaction chamber is connected to the sample port through a first microchannel, each first microchannel is respectively provided with one or more bending portions, and each reaction chamber is further connected with a corresponding exhaust port through a second microchannel. By avoiding the reagent backflow in the reaction chamber through the bending portions, the microfluidic chip can keep the reagents in each reaction chamber from interfering with each other without configuring a control valve or piston to avoid pollution. In a preferred embodiment, there is only one sample port, so it is only necessary to add samples to one sample port, which is convenient to use.

In a preferred embodiment, the bending portion comprises an arc-shaped bending portion that is arc-shaped as a whole, and the center angle of the arc-shaped bending portion is greater than 90 degrees.

In a more preferred embodiment, each of the arc-shaped bending potions comprises at least one first arc-shaped bending portion and at least one second arc-shaped bending portion, and the circle center of the first arc-shaped bending portion and the circle center of the second arc-shaped bending portion are respectively located on the opposite sides of the first microchannel.

Further, the first arc-shaped bending portion and the second arc-shaped bending portion are staggered, and the first arc-shaped bending portion and its adjacent second arc-shaped bending portion are directly connected or connected through a linear channel.

In an embodiment, an overflow groove is further provided on the chip body, and the overflow groove is connected to or surrounds the sample port.

In an embodiment, a positioning ridge is arranged on the left side or the right side of the chip body.

In an embodiment, the microfluidic chip further comprises a cover film which is arranged on the surface of the chip body and covers the exhaust ports to allow gas to pass through but not liquid to pass through.

In an embodiment, the microfluidic chip further comprises a first sealing film for sealing the sample port and/or the exhaust ports.

In an embodiment, the sample port and exhaust ports are arranged on a first surface of the chip body, the reaction chambers are arranged on a second surface of the chip body, and the microfluidic chip further comprises a second sealing film for closing the reaction chambers, and the second sealing film is covered on the second surface.

In a preferred embodiment, there are a plurality of grooves on the second surface of the chip body. Further, the first microchannels and the second microchannels are also arranged on the second surface of the chip body.

In an embodiment, the microfluidic chip comprises a chip shell comprising a shell body and a sealing folding lug, the chip body is mounted inside the shell body, and the microfluidic chip has a detection state and an initial state, and the sealing folding lug is connected to the shell body and covers on the sample port and/or the exhaust ports in the detection state; the sealing folding lug is detached from the sample port and the exhaust ports in the initial state.

In an embodiment, the microfluidic chip further comprises a sealing pad that is pressed tightly on the sample port and/or the exhaust ports by the sealing folding lug in the detection state.

In an embodiment, the sealing folding lug can be rotatably connected to the shell body relative to the shell body.

In an embodiment, the sealing folding lug is connected to the shell body through a deformable weak portion.

In an embodiment, the weak portion is a fold line extending along the long side direction or the short side direction of the chip body.

Due to the use of the above solutions, the present invention has the following advantages over the prior art:
The LAMP detector and detection system of the present invention have compact structure and small volume, and the overall size of the LAMP detector can be as small as 250 mm × 120 mm × 80 mm, under the premise of integrating nucleic acid amplification and detection, automatic code scanning, detection result display and printing, it can be hand-held for detection, easy to carry and use; users can automatically complete heating and isothermal amplification, fluorescence detection analysis, and detection structure display by loading the microfluidic chip, which improves the detection efficiency.

### Brief Description of the Drawings

For more clearly explaining the technical solutions in the embodiments of the present invention, the accompanying drawings used to describe the embodiments are simply introduced in the following. Apparently, the below described drawings merely show a part of the embodiments of the present invention, and those skilled in the art can obtain other drawings according to the accompanying drawings without creative work.
Figure 1 is a three-dimensional schematic diagram of an LAMP detection system according to an embodiment of the present invention under a viewing angle;
Figure 2 is a three-dimensional schematic diagram of an LAMP detection system according to an embodiment of the present invention under another viewing angle;
Figure 3 is an internal structure schematic diagram of an LAMP detector according to an embodiment of the present invention under a viewing angle, where the microfluidic chip has been inserted;
Figure 4 is an internal structure schematic diagram of an LAMP detector according to an embodiment of the present invention under another viewing angle, where the microfluidic chip has been inserted;
Figure 5 is a schematic exploded diagram of a microfluidic chip, a chip seat and a heating assembly;
Figure 6 is a schematic diagram of a cover film of a first surface of a microfluidic chip according to an embodiment of the present invention;
Figure 7 is a schematic diagram of a cover film of a second surface of a microfluidic chip according to an embodiment of the present invention;
Figure 8 is a three-dimensional schematic diagram of the chip body;
Figure 9 is a schematic diagram of a first surface of the chip body;
Figure 10 is a schematic diagram of a second surface of the chip body;
Figure 11 is a side view of the chip body;
Figure 12 is a structure schematic diagram of another microfluidic chip when in an initial state;
Figure 13 is a structure schematic diagram of another microfluidic chip when in use;
Figure 14 is a schematic diagram of another microfluidic chip when in an LAMP detector;
Figure 15 is a structure block diagram of a control system of an LAMP detector according to an embodiment of the present invention;
Figure 16 is a flow chart of the control flow of an LAMP detector according to an embodiment of the present invention.

### Reference numbers:

1 - housing; 10 - chip port; 11 - power interface; 12 - recess portion;
2 - chip seat; 21 - fixed portion; 21a - slot; 22 - support portion; 22a - support surface;
3 - heating assembly; 31 - heat conducting plate; 32 - heating film; 33 - temperature sensor; 34 - fuse wire;
35 - compression spring;
4 - optical detection device; 41 - spectral sensor;
5 - driving mechanism; 51 - guide rail; 52 - mounting block; 53 - motor; 54 - screw rod; 55 - optocoupler;
61 - power supply; 610 - battery box; 62 - touch screen; 63 - printer; 64 - code scanner;
7 - microfluidic chip; 70 - chip body; 70a - first surface; 70b - second surface; 701 - sample port; 702 - overflow groove; 703 - exhaust port; 704 - reaction chamber; 705 - first microchannel; 705a - first arc-shaped bending portion; 705b - second arc-shaped bending portion; 706 - second microchannel; 707 - groove; 708 - unfilled corner; 71 - cover film; 72 - first sealing film; 73 - second sealing film; 74 - chip shell; 741 - shell body; 741a - first lug; 742 - sealing folding lug; 743 - fold line; 75 - sealing pad;
81 - first control chip; 82 - second control chip.

### Detailed Description of Exemplary Embodiments

In the following, the preferable embodiments of the present invention are explained in detail combining with the accompanying drawings so that the advantages and features of the present invention can be easily understood by the skilled persons in the art. It should be noted that the explanation on these implementations is to help understanding of the present invention, and is not intended to limit the present invention.

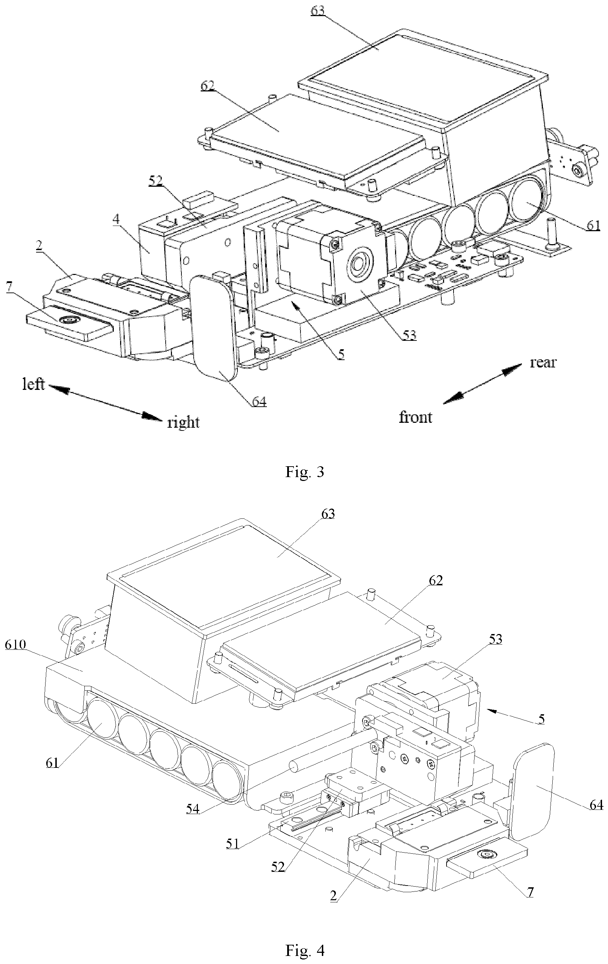

In the description of the present application, it should be noted that the orientations or positional relationships indicated by the terms "upper", "lower", "left", "right", "front", "rear", "vertical", "horizontal", "inner", "outer", etc. are based on those shown in the accompanying drawings, are only for the convenience of describing the present invention and simplifying the description, rather than indicating or implying that the indicated device(s) or element(s) must have a specific orientation, be constructed and operated in a specific orientation, and therefore should not be construed as a limitation of the present application. The orientation words mentioned herein are all based on the arrows in Figure 3.

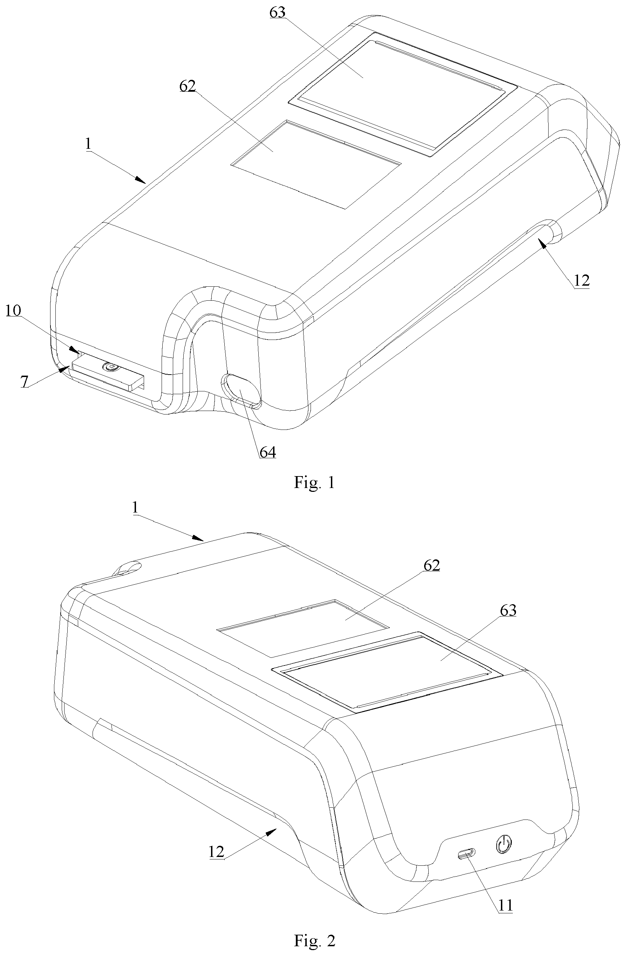

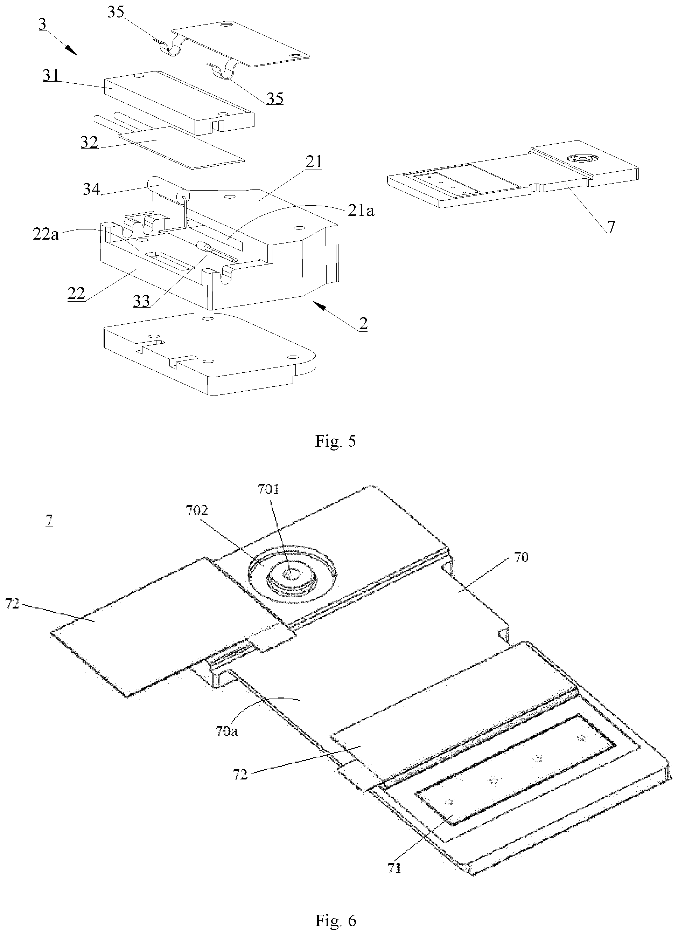

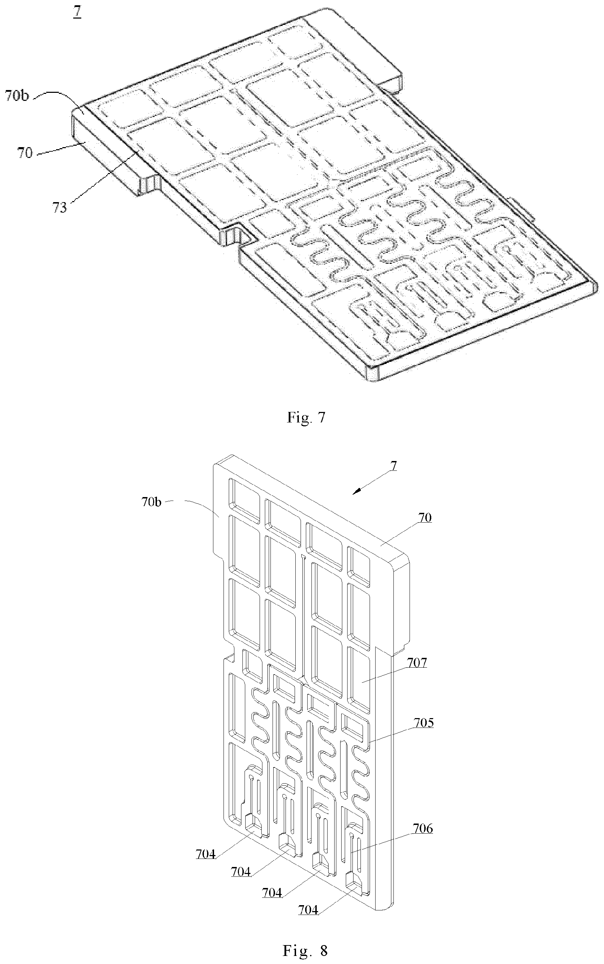

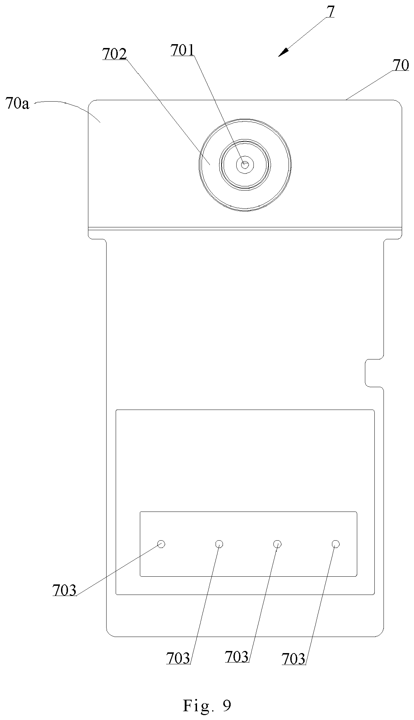

This embodiment provides a hand-held LAMP detector and a hand-held LAMP detection system, specifically a detector and detection system for nucleic acid detection. As shown in Figure 1 and Figure 2, the hand-held LAMP detection system comprises the LAMP detector mentioned above and a microfluidic chip 7. The LAMP detector comprises a housing 1 in which an inner cavity for mounting the internal components is formed. The front side wall of the housing 1 is provided with a chip port 10 for inserting the microfluidic chip 7, from which the microfluidic chip 7 is inserted into the LAMP detector. The internal structure of the LAMP detector is shown in Figures 3 to 5, with the housing 1 not shown. Referring to Figure 3 to Figure 5, the LAMP detector further comprises a chip seat 2, a heating assembly 3, an optical detection device 4, a driving mechanism 5, a power supply 61, a touch screen 62, a printer 63, a code scanner 64, and a control system, etc.. The chip port 10 is arranged on the front side wall of the housing 1, the chip seat 2 is located in the front portion of the inner cavity, the power supply 61 is located at the rear side of the inner cavity, the heating assembly 3 is arranged on the chip seat 2, at least part of the optical detection device 4 is located above the chip seat 2, and the driving mechanism 5 is arranged between the chip seat 2 and the power supply 61. Figures 6 to 11 show the microfluidic chip 7 of the hand-held LAMP detection system, and the microfluidic chip 7 has a plurality of reaction chambers 704 in parallel in the left-right direction.

In combination with Figure 3 to Figure 5, the chip seat 2 is arranged in the inner cavity, the chip seat 2 has an accommodating space for accommodating the microfluidic chip 7, the accommodating space is opposite to the chip port 10, and the microfluidic chip 7 is horizontally inserted into the accommodating space from the chip port 10. Specifically, as shown in Figure 5, the chip seat 2 comprises a fixed portion 21 and a support portion 22 located at the rear side of the fixed portion 21, and the chip seat 2 is integrally molded, such as molded by plastic injection molding. The above accommodating space comprises a slot 21a for the microfluidic chip 7 to pass through on the fixed portion 21, the slot 21a penetrates through the fixed portion 21 in the front-rear direction; the support portion 22 has a support surface 22a for facing the rear portion of the microfluidic chip 7, and the heating assembly 3 is arranged on the support surface 22a. Further, the slot 21a is generally horizontal and on the same level with the chip port 10, and the two are facing each other; the support surface 22a is specifically located on the upper surface of the support portion 22, and the heating assembly 3 is arranged on the support surface 22a, and after the microfluidic chip 7 is inserted, the rear portion of the microfluidic chip 7 (that is, the part with the reaction chambers 704) is located on the heating assembly 3, and the two fit to or are close to each other, ideally, they fit to each other, so as to facilitate heating the systems in the reaction chambers 704 of the microfluidic chip 7 for isothermal amplification. The chip seat 2 is fixed on a lower side wall of the front portion of the housing 1.

In combination with Figure 3 to Figure 5, the heating assembly 3 is used to isothermally heat the microfluidic chip 7, and the heating assembly 3 is arranged in the inner cavity of the housing 1, further arranged on the support surface 22a of the chip seat 2. Specifically, as shown in Figure 5, the heating assembly 3 comprises a heat conducting plate 31, a heating film 32, a thermal insulation pad, a temperature sensor 33 and a fuse wire 34, the thermal insulation pad is arranged on the support surface 22a of the chip seat 2, the heating film 32 is arranged on the thermal insulation pad, the heat conducting plate 31 is arranged on the heating film 32, and the temperature sensor 33 and the fuse wire 34 are arranged in the thermal insulation pad. Further, the conducting plate 31, the heating film 32, and the thermal insulation pad are stacked on the support surface 22a of the chip seat 2 from top to bottom. The fuse wire 34 and the heating film 32 are connected in series for overcurrent protection. The heating assembly 3 further comprises a compression spring 35 for pressing the microfluidic chip 7 onto the heat conducting plate 31, and the compression spring 35 is fixedly arranged on the mounting base. There is a plurality of compression springs 35 arranged at intervals along the left-right direction, and the compression springs 35 can be elastically deformed. The compression springs 35 are U-shaped with an upward opening as a whole, and after the microfluidic chip 7 is inserted, the compression springs 35 are squeezed by the microfluidic chip 7 and bent upward in parallel, under the effect of elastic force, the lower end portions of the compression springs 35 are pressed against the microfluidic chip 7 to press it on the heat conduction plate 31, so that the two fit to each other, and a good heating effect is achieved.

In combination with Figure 3 and Figure 4, the optical detection device is movably arranged in the inner cavity along the left-right direction. The optical detection device 4 has a plurality of detection positions which respectively corresponds to the plurality of reaction chambers 704 on the microfluidic chip 7. During detection, the optical detection device 4 moves to one detection position to detect a corresponding reaction chamber 704; after the detection is completed, the optical detection device 4 continues to move to the next detection position to detect the corresponding reaction chamber 704. The optical detection device 4 adopts a known optical device, which can emit a laser beam that irradiates the systems in the reaction chambers 704 to excite fluorescence, and can also collect the excited fluorescence and perform spectral analysis. The optical detection device 4 of this embodiment preferably adopts a monochrome laser light source; the optical detection device 4 further comprises a spectral sensor for spectral analysis of the excited fluorescence.

In combination with Figure 3 and Figure 4, the optical detection device 5 is to drive the optical detection device 4 to move along the left-right direction, and the driving mechanism 5 is arranged in the inner cavity. Specifically, the driving mechanism 5 comprises a guide rail extending in the left-right direction arranged on the inner wall (specifically the lower side wall) of the housing 1, a mounting block 52 movably arranged on the guide rail 51 in the left-right direction, and a motor 53 for driving the mounting block 52 to move in the left-right direction, the motor 53 is arranged on the inner wall of the housing 1, and the optical detection device 4 is arranged on the mounting block 52. Further, the motor 53 drives a screw rod 54 extending in the left-right direction to rotate, the screw rod 54 is connected to the mounting block 52 through a nut, and as the screw rod 54 rotates, the mounting block 52 moves along the left-right direction, thereby driving the optical detection device 4 to move left and right.

Referring to Figure 3 to Figure 4, the power supply is arranged in the inner cavity of the housing 1 for powering the heating assembly 3, the optical detection device 4, the driving mechanism 5, the touch screen 62, the printer 63, the code scanner 64, and the control system, etc.. Specifically, the power supply 61 is a rechargeable battery arranged in a power supply box 61, the power supply box 61 is arranged on the inner wall of the housing 1. The rear side of the housing 1 is provided with a power interface 11 (as shown in Figure 2) electrically connected with the power supply 61, and when it is convenient to connect an external power supply (such as mains supply), the power interface 11 can be connected to an external power supply to charge the power supply, or the LAMP detector can also be powered directly by an external power supply.

In combination with Figure 1 to Figure 4, the printer 63 and the touch screen 62 are arranged in the upper side wall of the housing 1 and located above the power supply 61, the touch screen 62 is located on the front side of the printer 63, the printer 63 can print the detection results and other information, and the touch screen 62 can display the detection results and other information. One of the functions of touch screen 62 is to display information, and the other is to serve as a human-computer interaction interface for users to input instruction. Accordingly, the touch screen 62 has a plurality of display states, in one display state, the touch screen 62 has an instruction input area for the user to input instruction, for example, it has a "start detection" button; in another display state, the touch screen 62 has a detection result display area for displaying detection results, such as "negative" or "positive".

In combination with Figure 1, Figure 3 and Figure 4, the code scanner 64 is arranged in the front side wall of the housing 1, located on the right or left side of the chip seat 2, and can read the barcode on the microfluidic chip 7 to obtain code-scanning information, which comprises sample information (sample source, etc.).

The lower portion and/or the side portion of the housing 1 are provided with a recess portion 12 which is convenient for the user to hold with fingers, so as to conform to ergonomics.

Referring to Figure 6 to Figure 11, the microfluidic chip 7 comprises a chip body 70, the chip body 70 is provided with one sample port 701, a plurality of reaction chambers 704 and a plurality of exhaust ports 703. Each reaction chamber 704 is connected to the sample port 701 through a first microchannel 705, and each first microchannel 705 is respectively provided with one or more bending portions. Each reaction chamber 704 is further connected with one corresponding exhaust port 703 through a second microchannel 706. The microfluidic chip 7 is a miniaturized microfluidic chip, which does not need to be equipped with any piston or valve for controlling the liquid flow, and is compact and suitable for use in the hand-held LAMP detector. Wherein, the first microchannel 705 of each reaction chamber 704 is bent at one or more positions to form one or more bending portions, which can buffer the liquid flow, etc., and can also effectively prevent the reagent in the reaction chamber 704 from flowing out of the first microchannel 705 without providing a valve or piston, so as to avoid pollution to other reaction chambers 704. Reagents for amplification such as primers are pre-placed in the reaction chambers 704, the primers in different reaction chambers 704 can be the same or different to detect different pathogens. The thickness of the front portion of the chip body 70 provided with the sample port 701 is greater than that of other portions.

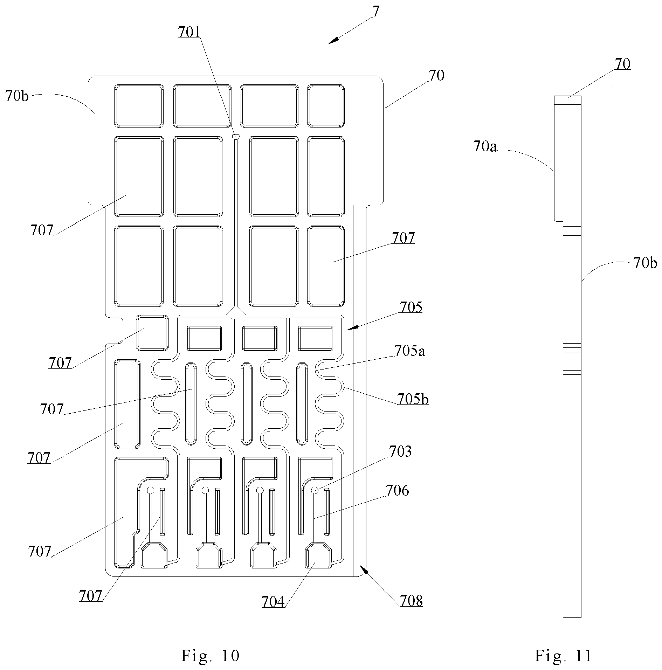

The bending portion comprises an arc-shaped bending portion that is arc-shaped as a whole, and the center angle of the arc-shaped bending portion is greater than 90 degrees, preferably 170 to 190 degrees. Further, the arc-shaped bending potion comprises at least one first arc-shaped bending portion 705a and at least one second arc-shaped bending portion 705b, and the circle centers of the first arc-shaped bending portions 705a are located on the right side thereof, and the circle centers of the second arc-shaped bending portions 705b are located on the left side thereof, that is, the circle centers of the two are respectively located on the opposite sides of the first microchannel 705. The center angles of the first arc-shaped bending portions 705a and the second arc-shaped bending portions 705b are 180 degrees. As shown in Figure 10, the first arc-shaped bending portions 705a and the second arc-shaped bending portions 705b are staggered, and the adjacent first arc-shaped bending portions 705a and the second arc-shaped bending portions 705b are directly connected or connected through linear channels, that is, each first microchannel 705 has a wavy section, which effectively prevents reagent such as primers in the reaction chambers 704 backflow.

In another embodiment, the above bending portions comprise a plurality of first bending portions and a plurality of second bending portions, each first bending portion forms an acute angle as a whole, and each second bending portion forms an acute angle as a whole. The first bending portions and the second bending portions are staggered, and the adjacent first bending portions and second bending portions are directly connected or connected through linear channels, that is, each first microchannel 705 has a Zigzag section.

The chip body 70 is in the form of a plate as a whole, which is integrally formed from plastic, such as by injection molding. The chip body 70 has opposite first surface 70a and second surface 70b, specifically in this embodiment, the first surface 70a is specifically the upper surface of the chip body 70, and the second surface 70b is specifically the lower surface of the chip body 70. The sample port 701 and the exhaust ports 703 are arranged on the first surface 70a of the chip body 70, and the reaction chambers 704, the first microchannels 705 and the second microchannels 706 are arranged on the second surface 70b of the chip body 70.

The microfluidic chip 7 further comprises a cover film 71 which is arranged on the surface of the chip body 70 and covers the exhaust ports 703 to allow gas to pass through but not liquid to pass through. The microfluidic chip 7 further comprises a first sealing film 72 for sealing the sample port 702 and/or the exhaust ports 703, and after the sample addition is completed, the first surface 70a of the chip body 70 is covered with the first sealing film 72 to isolate the sample port 701 and the exhaust ports 703 from the outside world, and then carry out the amplification reaction to prevent pollution. The first surface 70a of the chip body 70 is further provided with an overflow groove 702 arranged around the sample port 701 to avoid polluting the first surface 70a of the chip body 70 during sample adding, so as to avoid affecting the tightness between the first sealing film 72 and the first surface 70a.

The microfluidic chip 7 further comprises a second sealing film 73 for closing the reaction chambers 704, the first microchannels 705 and the second microchannels 706, and the second sealing film 73 is arranged on the second surface 70b. The second surface 70b of the chip body 70 is provided with a plurality of grooves 707, the grooves 707 are specifically formed in the area of the second surface 70b without the reaction chambers 704, the first microchannels 705 and the second microchannels 706, they adapt to the shapes and locations of the reaction chambers, the first microchannels 705 and the second microchannels 706, and have different shapes, sizes and positions, and avoid these reaction chambers, the first microchannels 705 and the second microchannels 706. The function of these grooves 707 is to facilitate the sealing of the second sealing film 73 and the chip body 70, to avoid bubbles after film pasting, and to prevent the chip body 70 from bending and deformation.

When the microfluidic chip 7 leaves the factory, the covering film 71 and the second sealing film 73 have been pre-attached to the proper position of the chip body 70, and isothermal amplification reagents, including primers, are pre-placed in each reaction chamber; after the nucleic acid sample to be tested is added, the user covers the second sealing film 73 on the sample port 701 and the covering film 71 to close the sample port 701 and each exhaust ports 703.

The right side of the chip body 70 is provided with a ridge or an unfilled corner 708, accordingly, the slot 21a of the chip seat 2 is correspondingly provided with a positioning slot matched with the positioning ridge or a projection matched with the unfilled corner 708, so as to avoid the reverse insertion of the microfluidic chip 7 and carry out a foolproof design.

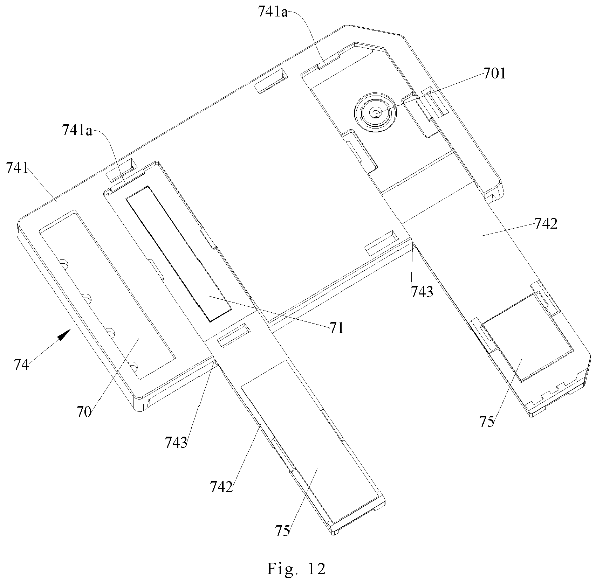

The LAMP detector can also adopt another microfluidic chip as shown in Figure 12 to Figure 13. The microfluidic chip 7 comprises a chip body 70 and a chip shell 74. The structure and configuration of the chip body 70 are basically the same as those of the chip body 70 in Figure 6 to Figure 11, except that there is no unfilled corner on the chip body 70; the chip body 70 is not covered with the first sealing film in an initial state and during use; the peripheral edges of the chip body 70 are respectively provided with a clamping positioning mechanism which is matched with the chip shell 74. The chip shell 74 comprises a shell body 741 and a sealing folding lug 742, and the chip body 70 is mounted in and clamped to the shell body 741. The microfluidic chip 7 has a detection state and the initial state, and in the detection state, the sealing folding lug 742 and the shell body 741 are connected to each other and covers on the sample port 701 and/or the exhaust ports 703; in the initial state, the sealing folding lug 742 is detached from the sample port 701 and the exhaust ports 703. That is, in this embodiment, the sample port 701 and the exhaust ports 703 are not closed by covering the sealing film, but are closed by the sealing folding lug 742. Further, as shown in Figure 12, the microfluidic chip 7 further comprises a sealing pad 75 pressed tightly on the sample port 701 and/or the exhaust ports 703 by the sealing folding lug 742 in the detection state. The sealing pad 75 is arranged on the sealing folding lug 742, for example, it is pasted on the sealing folding lug 742 through adhesive. In this embodiment, the chip shell 74 comprises two sealing folding lugs 742, one sealing folding lug 742 is to close the sample port 701, and the other sealing folding lug 742 is to close the exhaust ports 703 under the cover film. The shell body 741 is provided with a first connection portion, and the sealing folding lug 742 is provided with a second connection portion, in the detection state, the first connection portion is connected to the second connection portion, and in the initial state, the first connection portion and the second connection portion are separated from each other. Specifically, the first connection portion comprises a first lug 741a, and the second connection portion is clamped between the first lug 741a and the chip body 70 in the detection state. The second connection portion is further provided with a first groove for accommodating the first lug 741a.

The sealing folding lug 742 can be rotatably connected with the shell body 741 relative to the shell body 741. After the sample addition is completed, the sealing folding lug 742 is turned over and pressed on the chip body 70. Further, the sealing folding lug 742 is connected to the shell body 741 through a deformable weak portion. Specifically, the weak portion is a fold line 743 extending along the long side direction of the chip body 70. The sealing folding lug 742 and the shell body 741 are formed by integral injection molding, the folding line 743 is formed after injection molding, and its thickness is less than that of the surrounding parts, so that it can be easily folded. In other embodiments, the sealing folding lug 742 can also be hinged to the shell body 741 through a hinge shaft.

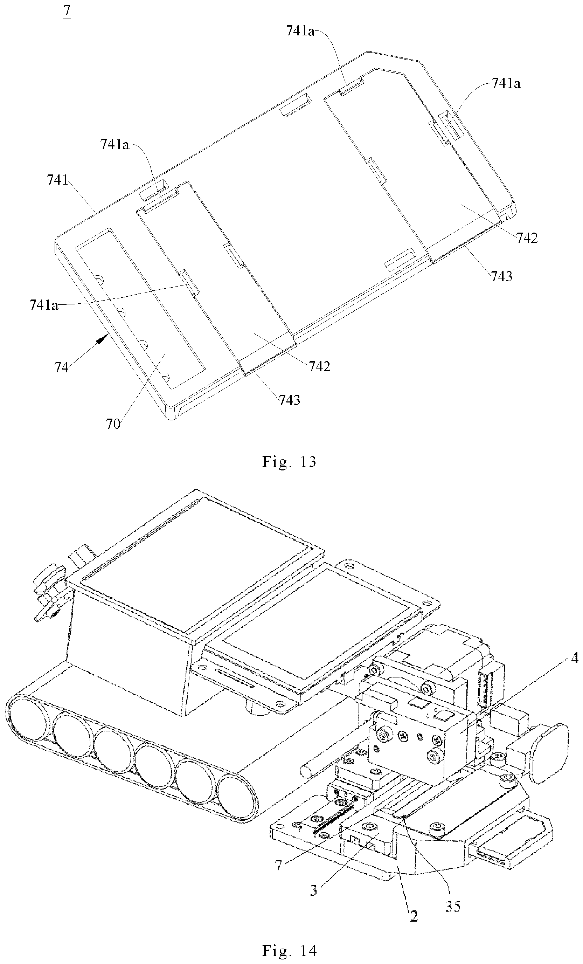

As shown in Figure 12, initially, the front side of the chip body 70 is covered with a second sealing film 73, the exhaust ports 703 on the back face of the chip body are covered with a cover film 71, the chip body 70 is arranged in the chip shell 74, and the sealing folding lug 742 of the chip shell 74 extends outside the shell body 741, which is located on the side of the chip body 70. As shown in Figure 13, in use, nucleic acid samples are added from the sample port 701 until the nucleic acid samples flow to the cover film 71 to seal the cover film 71, or even the additional samples overflow into the overflow groove; the sealing folding lug 742 is turned over to the back face of the chip body 70 along the fold line 743, and its edge portion is pressed under the first lug 741a, so that the sealing pad 75 is compressed on the sample port 701 and the cover film 71 by the sealing folding lug 742, forming a closed environment isolated from the outside air in the microfluidic chip 7, in which isothermal amplification and fluorescence detection are carried out.

Figure 14 shows the match usage of the microfluidic chip 7 and the LAMP detector. As shown in Figure 14, the microfluidic chip 7 is inserted into the LAMP detector, specifically into the chip seat 2, and the rear portion of the microfluidic chip 7 is pressed by the compression spring 35 onto the heating assembly 3 on the chip seat 2 below, so that the two fit to each other, thereby heating the reaction area of the microfluidic chip 7. The optical detection mechanism 4 is located above the rear portion of the microfluidic chip 7, and the hollow portion on the chip shell 74 allows the excitation light (laser) and the excited fluorescence to pass through.

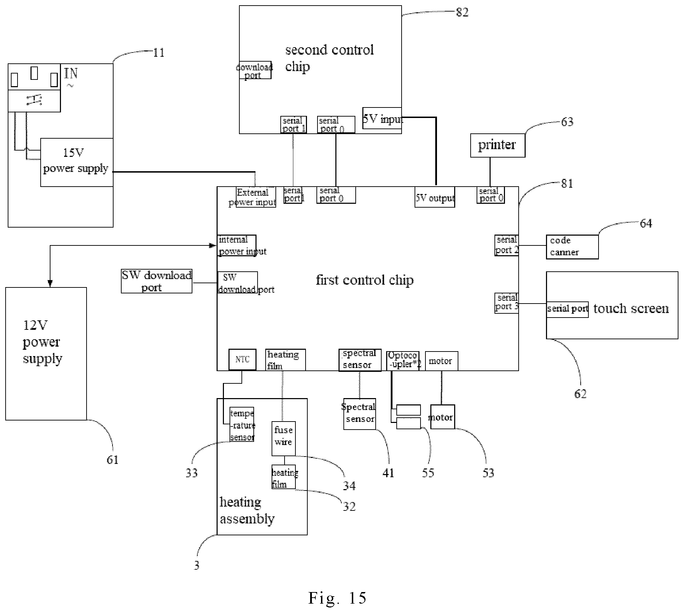

The LAMP detector further comprises a controller, and the controller is electrically connected with the heating assembly 3, the optical detection device 4, the driving mechanism 5, the power supply 61, the touch screen 62, the printer 63, and the code scanner 64, etc., respectively, so that the LAMP detector can run automatically to realize nucleic acid detection and result display. Figure 15 shows the control block diagram of the hand-held LAMP detector, wherein the controller specifically comprises a first control chip 81 and a second control chip 82 arranged on a PCB board, and the first control chip 81 is the main control chip; the second control chip 82 is a control chip for the printer 63 and is used for external communication, such as via Bluetooth, Wi-Fi, 4G or 5G, etc..

The power interface 11 is electrically connected to an external power input port of the first control chip 81, and after the power interface 11 is connected to the external power supply, the external power supply can power the entire LAMP detector and charge the power supply 61. The power supply 61 is electrically connected with the first control chip 81, and when the external power supply is not connected, the power supply 61 powers the entire LAMP detector. Wherein, the first control chip 81 converts the 15V voltage from the external power supply or the 12V voltage from the power supply 61 to supply the second control chip 82, the heating assembly 3, the motor 53, the touch screen 62, the code scanner 64, and the printer 63, etc.. The first control chip 81 is further used to monitor the electric quantity of the power supply 61, and when the electric quantity is less than the set threshold value, the touch screen 62 sends out a power insufficiency alarm signal.

The heating film 32 of the heating assembly 3 is electrically connected with the serial port of the first control chip 81 through the fuse wire 34, and the temperature sensor 33 is electrically connected with another serial port of the first control chip 81. The first control chip 81 receives the temperature detection data from the temperature sensor 33, compares it with the set temperature, and uses the PID algorithm to adjust the temperature of the heating film 32 in real time to maintain the heating temperature of the heat conducting plate 31 at 65 ± 0.5 °C.

The motor 53 is electrically connected with the serial port of the first control chip 81, and the serial port of the first control chip 81 is further electrically connected with the optocoupler through which whether the motor 53 rotates to a set angle is detected to reset and limit the motor 53. The spectral sensor of the optical detection device 4 is electrically connected with the serial port of the first control chip 81 to receive the detection result. After the motor 53 is at the initial position and after the set reaction time, the spectral sensor analyzes and detects the fluorescence of the first reaction chamber 704, and sends the detection result to the first control chip 81; after the first reaction chamber 704 is detected, the motor 53 rotates to cause the spectral sensor to move above the second reaction chamber 704, read the fluorescence of the second reaction chamber 704, and send the reading result to the second control chip 82; and so on. The touch screen 62 is electrically connected with a serial port 3 of the first control chip 81, the touch screen 62 can receive the user's instructions and send them to the first control chip 81, and the first control chip 81 can send the detection results, and scanning information, etc. to the touch screen 62 for display. The code scanner 64 is electrically connected with a serial port 2 of the first control chip 81, the code scanner 64 can read the barcode information of the sample to obtain the sample source, the name of the subject and other information; the first control chip 81 can accept the read barcode information and associate it with the detection result.

The printer 63 is electrically connected with a serial port 0 of the first control chip 81, the other serial port 0 of the first control chip 81 is electrically connected with a serial port 0 of the second control chip 82, and the first control chip 81 can send the read barcode information and detection results to the printer 63 for printing.

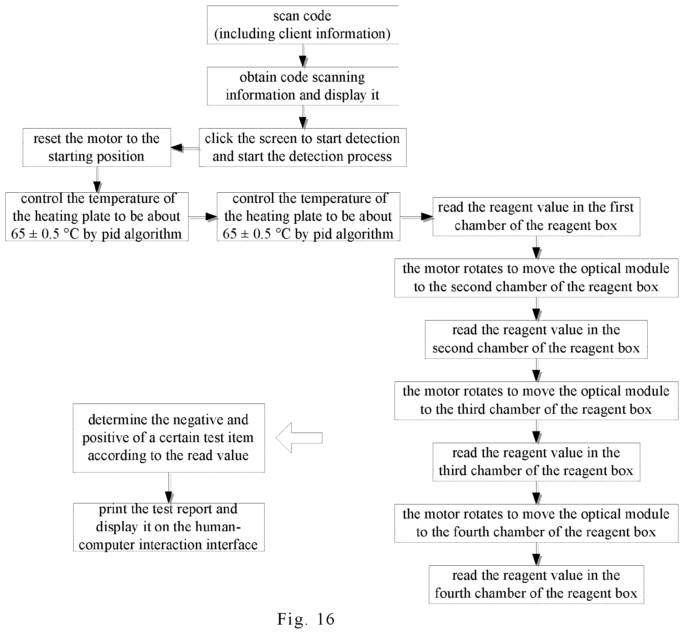

As shown in Figure 16, the control flow of the hand-held LAMP detector is as follows:
S101, code scanning

The scanner 64 reads the barcode information, where the barcode information comprises sample information, user information, etc., and the barcode information can be a one-dimensional code or a two-dimensional code provided on the microfluidic chip 7.

### S102, loading microfluidic chip 7

The microfluidic chip 7 is inserted into the hand-held LAMP detector horizontally from the chip port 10, where the microfluidic chip 7 has been pretreated. The pre-treatment process is as follows: adding nucleic acid samples from the sample port 701 until the nucleic acid samples flow to the cover film 71 to seal the cover film 71, or even the additional samples overflow into the overflow groove; covering the first sealing film 72 on the sample port 701 and the cover film 703 to close the sample port 701 and the respective exhaust ports 703, so that a closed environment isolated from the outside air is formed in the microfluidic chip 7, in which isothermal amplification and fluorescence detection are carried out.

### S103, the touch screen 62 receives the user's detection command

The touch screen 62 is switched to the display state with the "start detection" button, where the user clicks the "start detection" button on the touch screen 62 to start the detection process.
S104, the controller receives the detection command, and controls the motor 53 to reset and the heating component 3 to heat

After receiving the user's start detection command, the first control chip 81 sends a control signal to the motor 53, and resets the motor 53 to its starting position in response to the control signal; the first control chip 81 specifically judges specifically whether the motor 53 returns to the starting position through the signal returned by the optocoupler. At the same time, the first control chip 81 controls the heating film 32 to heat, specifically: the first control chip 81 receives the heating temperature value fed back by the temperature sensor 33, compares the heating temperature value with the set temperature value (65 °C), and controls the heating temperature of the heating film 32 to maintain at 65 ± 0.5 °C through the pid algorithm, so that the reaction system in each reaction chamber 704 of the microfluidic chip 7 can be isothermally heated.

### S105, the controller controls the optical detection device 4 to read the detection results of the first reaction chamber 704

The first control chip 81 sends a control signal to the motor 53, and in response to the control signal, the motor 53 rotates a certain angle, which is converted from the space between the initial position of the optical detection device 4 and the first reaction chamber 704, so that the optical detection device 4 can move to a first detection position directly facing the first reaction chamber 704, so as to conduct laser irradiation on the amplification products in the first reaction chamber 704, and collect the excited fluorescence, and the spectral sensor analyzes the collected fluorescence, and sends the fluorescence analysis value to the first control chip 81.

### S106, the controller controls the optical detection device 4 to read the detection results of the next reaction chamber 704

After receiving the fluorescence analysis value of the previous reaction chamber 704, the first control chip 81 sends a control signal to continue to rotate the motor 53 for another set angle, which is converted from the space between two adjacent reaction chambers 704, so that the optical detection device 4 can move to the next detection position directly facing the next reaction chamber 704 (such as, the second, third, or fourth reaction chamber 704) , so as to conduct laser irradiation on the amplification products in this next reaction chamber 704, and collect the excited fluorescence, and the spectral sensor analyzes the collected fluorescence, and sends the fluorescence analysis value to the first control chip 81. S107, the controller judges the fluorescence analysis values sent by the optical detection device 4 and obtains the detection results of the corresponding detection items of each reaction chamber 704

After receiving the fluorescence analysis value returned by the optical detection device 4 for the first time, the first control chip 81 judges the negative and positive of the detection item (such as pathogen A) corresponding to the first reaction chamber 704 according to the pre-stored interpretation standard. After receiving the fluorescence analysis value returned by the optical detection device 4 for the second time, the first control chip 81 judges the negative and positive of the detection item (such as pathogen B) corresponding to the second reaction chamber 704 according to the pre-stored interpretation standard. After receiving the fluorescence analysis value returned by the optical detection device 4 for the third time, the first control chip 81 judges the negative and positive of the detection item (such as pathogen C) corresponding to the third reaction chamber 704 according to the pre-stored interpretation standard. After receiving the fluorescence analysis value returned by the optical detection device 4 for the fourth time, the first control chip 81 judges the negative and positive of the detection item (such as pathogen D) corresponding to the fourth reaction chamber 704 according to the pre-stored interpretation standard. And so on.

### S108, the controller sends the detection results to the printer 63 for printing and to the touch screen 62 for display

The first control chip 81 sends the test results (negative/positive) of each test item and the information read by scanning the code to the printer 63, and the second control chip 82 controls the printer 63 to print the test report. At the same time, the first control chip 81 sends the test results of each test item to the touch screen 62, and the touch screen 62 switches to another display state to display the test results and the information read by scanning the code.

The control flow further comprises the following step before step S101:
S100, Controller acquires the electric quantity of the power supply 61

The first control chip 81 detects the electric quantity of the power supply 61, and judges whether the electric quantity is greater than or equal to a set threshold value, if the result is yes, perform the following steps; if the result is no, a low battery alarm signal will be sent through touch screen 62, etc..

After the user receives the low battery alarm signal, an external power supply is connected, which supplies power and charges power supply 61.

In this embodiment, the power supply is specifically a rechargeable battery. In other embodiments, the power supply is a power cord that can be connected to the mains supply.

In the above LAMP detector and detection system, all internal components adopt the above arrangement and configuration, making the overall structure compact and the volume small (the overall size of the LAMP detector can be as small as 250 mm × 120 mm × 80 mm), powered by the power supply 61, and under the premise of integrating nucleic acid amplification and detection, automatic code scanning, detection result display and printing, it can be hand-held for detection, easy to carry and use; users can automatically complete scanning, heating and isothermal amplification, fluorescence detection analysis, and detection structure display by loading the microfluidic chip 7, which improves the detection efficiency. The used microfluidic chip 7 can keep the reagents in each reaction chamber from interfering with each other without configuring a control valve or piston to avoid pollution; it is only necessary to add samples to one sample port 701, which is convenient to use; because there is no control valve or piston, the overall volume of microfluidic chip 7 is small (as small as 34mm × 58mm × 3 mm), which greatly reduces the overall volume of the matched LAMP detector and is suitable for handheld detection.

As shown in the description and claims, the terms "comprising" and "containing" only indicate that the clearly identified steps and elements are included, and these steps and elements do not constitute an exclusive list, and the method or device may also include other steps or elements. The term "and/or" as used herein includes any combination of one or more of the associated listed items.

It should be noted that, unless otherwise specified, when a feature is called "fixed" or "connected" to another feature, it can be directly fixed or connected to another feature, or it can be indirectly fixed or connected to another feature. In addition, the description of the upper, lower, left, right and the like used in the present invention is only relative to the relative position relationship of the components of the present invention in the drawings.

It is further understood that the terms "first", "second", etc. are used to describe various information, but such information should not be limited to these terms. These terms are only used to distinguish the same type of information from each other, and do not indicate a specific order or importance. In fact, expressions such as "first" and "second" can be used interchangeably. For example, without departing from the scope of the present invention, the first information can also be called the second information, and similarly, the second information can also be called the first information.

The singular forms "a", "said", and "the" are intended to include the plural forms as well, unless the context clearly dictates otherwise.

The embodiments described above are only for illustrating the technical concepts and features of the present invention, are preferred embodiments, and are intended to make those skilled in the art being able to understand the present invention and thereby implement it, and should not be concluded to limit the protective scope of this invention.

## Claims

1. A hand-held LAMP detector, comprising:
a housing with an inner cavity and a chip port for inserting a microfluidic chip;
a chip seat arranged in the inner cavity, the chip seat having an accommodating space for accommodating the microfluidic chip, and the accommodating space being opposite to the chip port;
a heating assembly for isothermally heating the microfluidic chip, the heating assembly being arranged in the inner cavity;
an optical detection device movably arranged in the inner cavity along a left-right direction, the optical detection device having a plurality of detection positions which respectively corresponds to a plurality of reaction chambers of the microfluidic chip; and
a driving mechanism for driving the optical detection device to move along the left-right direction, the driving mechanism being arranged in the inner cavity.

2. A hand-held LAMP detector according to claim 1, **characterized in that,** the hand-held LAMP detector further comprises:
a power supply for supplying power for the heating assembly, the optical detection device and the driving mechanism, wherein the power supply is arranged in the inner cavity.

3. A hand-held LAMP detector according to claim 2, **characterized in that,** the chip port is arranged on a front side wall of the housing, the chip seat is located in a front portion of the inner cavity, the power supply is located at a rear side of the inner cavity, the heating assembly is arranged on the chip seat, at least part of the optical detection device is located above the chip seat, and the driving mechanism is arranged between the chip seat and the power supply.

4. A hand-held LAMP detector according to claim 3, **characterized in that,** the power supply is a rechargeable battery, and the rear side of the housing is provided with a power interface electrically connected with the power supply.

5. A hand-held LAMP detector according to any one of the preceding claims, **characterized in that,** the hand-held LAMP detector further comprises a printer and a controller, the printer is arranged on an upper side wall of the housing and above the power supply, and the controller is electrically connected with the optical detection device and the printer, respectively.

6. A hand-held LAMP detector according to any one of the preceding claims, **characterized in that,** the hand-held LAMP detector further comprises a touch screen and a controller, the touch screen is arranged on an upper side wall of the housing and above the power supply, and the controller is electrically connected with the heating assembly, the optical detection device, the driving mechanism, and the touch screen, respectively.

7. A hand-held LAMP detector according to claim 6, **characterized in that,** the touch screen has a plurality of display states, in one of the display states, the touch screen has an instruction input area for user to input instruction.

8. A hand-held LAMP detector according to any one of the preceding claims, **characterized in that,** the chip seat comprises a fixed portion and a support portion located at a rear side of the fixed portion, the accommodating space comprises a slot arranged on the fixed portion for the microfluidic chip to pass through, the slot penetrates through the fixed portion in a front-rear direction, the support portion has a support surface for facing a rear portion of the microfluidic chip, the heating assembly is arranged on the support surface, and the slot is directly facing to the chip port.

9. A hand-held LAMP detector according to any one of the preceding claims, **characterized in that,** the heating assembly comprises a heat conducting plate, a heating film, a thermal insulation pad, a temperature sensor and a fuse wire, the thermal insulation pad is arranged on the chip seat, the heating film is arranged on the thermal insulation pad, the heat conducting plate is arranged on the heating film, and the temperature sensor and the fuse wire are arranged in the thermal insulation pad.

10. A hand-held LAMP detector according to any one of the preceding claims, **characterized in that,** the driving mechanism comprises a guide rail extending in the left-right direction arranged on an inner wall of the housing, a mounting block movably arranged on the guide rail in the left-right direction, and a motor for driving the mounting block to move in the left-right direction, the motor is arranged on the inner wall of the housing, and the optical detection device is arranged on the mounting block.

11. A hand-held LAMP detector according to any one of the preceding claims, **characterized in that,** a lower portion of the housing is provided with a recess portion for easy finger holding.

12. A hand-held LAMP detection system, comprising an LAMP detector and a microfluidic chip, **characterized in that,** the LAMP detector is a hand-held LAMP detector according to any one of claims 1 to 11.

13. A hand-held LAMP detection system according to claim 12, **characterized in that,** the microfluidic chip comprises a chip body, the chip body is provided with a sample port, a plurality of reaction chambers and a plurality of exhaust ports, each reaction chamber is connected with the sample port through a first microchannel, each first microchannel is respectively provided with one or more bending portions, and each reaction chamber is further connected with a corresponding exhaust port through a second microchannel.

14. A hand-held LAMP detection system according to claim 13, **characterized in that,** each of the bending portions comprises an arc-shaped bending portion that is arc-shaped as a whole.

15. A hand-held LAMP detection system according to claim 14, **characterized in that,** each of the arc-shaped bending potions comprises at least one first arc-shaped bending portion and at least one second arc-shaped bending portion, circle center of the first arc-shaped bending portion and circle center of the second arc-shaped bending portion are respectively located on the opposite sides of the first microchannel, and the first arc-shaped bending portion and its adjacent second arc-shaped bending portion are directly connected or connected through a linear channel.
